# EUROPÄISCHE PATENTSCHRIFT

(11) **EP 0 771 643 B1**
(45) Veröffentlichungstag und Bekanntmachung des Hinweises auf die Patenterteilung: **16.01.2002**
(21) Anmeldenummer: 96117461.2
(22) Anmeldetag: 31.10.1996
(51) Int. Cl.: B29D 30/44, B65H 23/02

(54) **Verfahren zur Förderung eines Bandes aus plastischem Material und Fördertisch zur kontinuierlichen Förderung von bandförmigem plastischem Material**
Process and conveyor table for continuously conveying a strip-like plastic material
Procédé et table de transfert pour transporter en continu une matière plastique en forme de ruban

(30) Priorität: 03.11.1995 DE 19541095
(43) Veröffentlichungstag der Anmeldung: 07.05.1997
(73) Patentinhaber: Continental Aktiengesellschaft, 30165 Hannover (DE)
(72) Erfinder: Jungk, Andreas, Dipl.-Ing., 30900 Wedemark (DE); Brandes, Gerd, Dipl.-Ing., 30966 Hemmingen (DE)

(56) Entgegenhaltungen:
- GB-A- 2 090 234
- LU-A- 86 033
- US-A- 3 069 056
- US-A- 3 343 737
- US-A- 4 095 731
- US-A- 4 554 713

## Beschreibung

Die Erfindung betrifft ein Verfahren zur Förderung eines Bandes aus plastischem Material, insbesondere eines Kautschukbandes, zu einer Weiterverarbeitungseinrichtung gemäß den Merkmalen des Oberbegriffs von Anspruch 1 sowie einen Fördertisch zur kontinuierlichen Förderung von bandförmigem plastischem Material, insbesondere von Kautschukmaterial, vorzugsweise zur Herstellung eines Reifens gemäß den Merkmalen des Oberbegriffs von Anspruch 3.

Es ist bekannt, zum Aufbau von Fahrzeugluftreifen, beispielsweise Kautschukmaterial für Laufstreifen und Seitenwände bandförmig zu einer Reifenaufbaumaschine kontinuierlich zu fördern. Zum Aufbau des Reifens werden von den kontinuierlich geförderten Bändern jeweils Stücke von einer im wesentlichen der Umfangslänge des Reifens entsprechender Länge abgeschnitten und auf bekannte Aufbautrommeln zur Fertigung des Reifens aufgelegt. Die kontinuierlich geförderten Kautschukbänder weisen aufgrund ihrer plastischen Eigenschaften herstellungs- und förderungsbedingt einen in Förderrichtung gesehenen, stark krummlinigen Kantenverlauf mit starken Schwankungen in Richtung quer zur Förderrichtung in beiden Kanten auf.

Zum Aufbau eines qualitativ hochwertigen Fahrzeugreifens müssen die einzelnen Kautschukstreifen über den gesamten Umfang der Aufbautrommel möglichst exakt in gleicher axialer Position aufgelegt werden. Schwankungen hinsichtlich der axialen Position insbesondere im Verbindungsbereich zwischen Laufstreifen und Seitenstreifen führen zu über den Umfang des Reifens ungleichmäßigen Reifeneigenschaften. Zur Herstellung ist es daher bekannt, daß Reifenbauer beim manuellen Auflegen der abgeschnittenen Streifen auf die Aufbautrommel die Streifen manuell zum Ausgleich von Schwankungen in der Kantenlinie seitlich zum Ausgleich der Krummlinigkeit nach rechts bzw. nach links ziehen. In ähnlicher Weise ist es bekannt, durch optoelektrische Messung der Kantenposition während der kontinuierlichen Förderung kontinuierlich seitliche Abweichungen in der Bahnkante zu ermitteln und entsprechend dem ermittelten Wert die Förderrichtung zur Aufbautrommel zum Ausgleich der Abweichungen durch seitliches Verschieben des Fördertischs zu verändern. Eine solche Ermittlung erfordert einen hohen Steuerungs- und Regelaufwand. Die Kürze der für die Reaktion zwischen Ermittlung der Abweichungen und der Einleitung einer Gegensteuerung zur Verfügung stehenden Zeit und die starken, häufig veränderten Abweichungen der Kantenposition ermöglichen zwar den Abbau der größten Amplituden des Kantenverlaufs. Die Kantenkontur bleibt jedoch trotz hohem Steueraufwand noch sehr unregelmäßig und stark krummlinig. Die Plastizität des Materials ermöglicht zudem die Entstehung zusätzlicher Verkrümmungen aufgrund der unregelmäßigen, teils sehr starken Richtungsveränderungen.
Die Zähigkeit des Kautschukmaterials wirkt einer schnellen exakt definierten Reaktionsmöglichkeit auf die ermittelten Abweichungen in der Kante zusätzlich entgegen.

Ein Verfahren gemäß den Merkmalen des Oberbegriffs von Anspruch 1 sowie ein Fördertisch gemäß den Merkmalen des Oberbegriffs von Anspruch 3 ist aus der US 4,095,731 bekannt. Aus diesem Dokument ist zu entnehmen, daß schmale Kautschukstreifen über eine Platte gezogen werden und dabei mit Hilfe von mehreren Bürsten seitlich gegen eine Seitenwand gedrückt werden. Dabei sind die Bürsten so eingestellt, daß sie lediglich auf den einen der Seitenwand gegenüberliegenden Seitenbereich des geförderten Streifens eingreifen und auf diese Weise diese Seite in Längsrichtung dehnen, so daß der Seitenstreifen in seiner Förderrichtung abgelenkt und gegen die Seitenwand gepreßt wird. Das Material des Streifens wird hierdurch über seine axiale Richtung so ungleichmäßig belastet, daß eine Materialanhäufung im Bereich der Seitenwand entstehen kann. Dies wird durch mehrere hintereinander angeordnete Bürsten mit verändertem Eingriffsbereich und unterschiedlichem Eingriffswinkel in seinen Auswirkungen zu beschränken versucht. Allerdings verbleibt das Risiko des unsteten axialen Materialanhäufungsverlaufs aufgrund der über die axiale Richtung unsteten Krafteinwirkung. Neben der Ungleichmäßigkeit in der Materialverteilung kann die einseitige mechanische zwischen Bürste und Platte axiale Krafteinwirkung dazu führen, daß das geförderte Material aufgrund seiner mangelnden Bogensteifigkeit im axialen Bereich zwischen den Bürsten und dem Seitenanschlag sich regelrecht aufwölbt und aufbäumt. Dieser Effekt wird dadurch verstärkt, daß die für eine zuverlässige Förderung als wichtig herausgestellte Luftlagerung durch Einblasen von Luft zwischen den geförderten Streifen und die Platte nicht nur die Reibung zwischen Platte und gefördertem Streifen zur Sicherstellung einer besseren Förderbarkeit reduziert, sondern daß dadürber hinaus hierdurch auch ein Abheben des Kautschukstreifens erleichtert wird. Nach Aufbäumen des Kautschukstreifenmaterials besteht die Gefahr, daß das Material entweder aufgebäumt bleibt und damit nicht zufriedenstellend ausgerichtet der Weiterverarbeitungseinrichtung zugeführt wird, oder daß zuvor zumindest teilweise das aufgebäumte Material rückgestellt wird, wodurch der Ausrichtungszustand zusätzlich undefiniert verändert wird. Der einseitige mechanische Eingriff mit Hilfe der Bürsten auf dem Zuführtisch birgt somit das erhöhte Risiko einer reduzierten Verarbeitungsqualität.

Jede Veränderung in der Breite des zu fördernden Materials (beispielsweise bei veränderten Reifendimensionen) birgt darüber hinaus die Gefahr, daß sich die Auswirkungen der einseitig angreifenden Kräfte in undefinierter Weise zusätzlich verschlechtern, so daß sinnvollerweise bei jeder Änderung (Material, Zusammensetzung, Breite des Streifens, Dicke des Streifens) eine überarbeitete Bürstenkonfiguration erforderlich wäre, die dennoch die o.g. Risiken mit sich brächte.

Aus der GB 2 090 234 A ist ebenfalls eine Fördervorrichtung mit Zentriereinrichtung bekannt, bei der die Zentrierung jedoch zur Mittellinie erfolgt. Hierdurch soll eine Zentrierung trotz Breitentoleranz ermöglicht werden. Hierzu werden Stützrollen verwendet, die auf ihrer einen Seite mit senkrechten Führungsrollen begrenzt und auf der anderen Seite von einer Abtasteinrichtung abgetastet werden. Die Stützrollen sind so geneigt, daß sie das Material zur Seite der Führungsrollen schieben. Die Führungsrollen und die Abtastrollen sind mit einer Verschiebeeinrichtung so gekoppelt, daß beide immer so verschoben werden, daß die Abtasteinrichtung und die Führung mittenzentriert werden. Somit wird durch diese Einrichtung der Kantenverlauf nicht parallel zur Förderrichtung, sondern krummlinig mittenzentriert ausgerichtet. Die Ausrichtung erfolgt dadurch, daß das Material durch die Stützrollen an die seitlichen Führungsrollen gefördert wird. Hierdurch tritt eine Verformung im streifenförmigen Material ein, durch die die Mittenzentrierung gewährleistet werden soll. Das lediglich eben auf den Stützrollen bewegte Streifenmaterial kann sich dadurch aufgrund der fehlenden Bogensteifigkeit nach oben hin regelrecht aufbäumen. Es ist auch möglich, daß, da das Material unabhängig von seiner Breite immer mit konstant angestellten gleichmäßigen Schrägstellwinkeln der Stützrollen an die seitlich während der in Förderung verfahrenden Führungsrollen bewegt wird, im Anschlagsbereich an den Führungsstellen unregelmäßige Verdickungen des Materials auftreten. Auch diese Art der Ausrichtung birgt somit eine erhöhte Gefahr des Aufbäumens des geförderten Streifenmaterials bei Auftreffen auf die Führungsrollen sowie von unregelmäßiger Verdickungen in sich. Auch bei dieser Ausrichtung ist sowohl die Zuführung eines kontinuierlich geförderten plastischen Bandmaterials, das in dieser Weise ausgerichtet wird, ungenau als auch die Weiterverarbeitbarkeit in der Förderrichtung beeinträchtigt.

Der Erfindung liegt die Aufgabe zugrunde, die Genauigkeit in der Zuführung eines kontinuierlich geförderten plastischen Bandmaterials, insbesondere eines Kautschukbandes vorzugsweise zur Reifenherstellung, und somit die Weiterverarbeitbarkeit in einer in Förderrichtung nachgeordneten Weiterverarbeitungseinrichtung mit einfachen Mitteln zu verbessern.

Erfindungsgemäß wird die Aufgabe durch das Verfahren zur Förderung eines Bandes aus plastischem Material, insbesondere eines Kautschukbandes, zu einer Weiterverarbeitungseinrichtung gemäß den Merkmalen von Anspruch 1 sowie durch die Ausbildung eines Fördertisches zur kontinuierlichen Förderung von bandförmigem plastischem Material, insbesondere von Kautschukmaterial vorzugsweise zur Herstellung eines Reifens, zu einer Weiterverarbeitseinrichtung gemäß den Merkmalen von Anspruch 3 gelöst.

Zweckmäßige weiterbildungen der Erfindung sind Gegenstand der abhängigen Ansprüche.

Durch Verschieben der senkrecht zur Förderrichtung in Förderrichtung hintereinander angeordnet ausgebildeten Querschnittsflächen des Bandes zueinander während der Förderung in Richtung quer zur Förderrichtung derart, daß die Querschnittsflächen mit ihrer einen, das Band zu einer Seite hin begrenzenden Querschnittsseite einen parallel zur Förderrichtung ausgebildeten Kantenverlauf des Bandes bilden und diesen bis zum Erreichen der Weiterverarbeitungseinrichtung beibehalten, wird diese eine, das Kautschukband zur Seite hin begrenzenden Seitenfläche geradlinig gemacht und parallel zur Förderrichtung ausgerichtet.

Die Auslenkung des Kautschukbandes in der Begradigungseinrichtung in seiner Förderebene aus der Förderebene heraus und wieder in die Förderebene hinein bewirkt eine erhöhte Bogensteifigkeit des Bandes, welche ein Aufbäumen des Kautschukbandes beim seitlichen Auftreffen auf die seitlichen Ausrichtelemente weitgehend verhindert. Dadurch, daß die maximale Auslenkung des Kautschukbandes über die Breite des Kautschukbandes von der einen zu der anderen Seite des Kautschukbandes kontinuierlich zunimmt, so daß das Kautschukband über seine Breite unterschiedlich stark aus der Förderebene ausgelenkt und dadurch seitlich gegen die seitlichen Ausrichtelemente auf der Kautschukbandseite mit der kleineren maximalen Auslenkung des Kautschukbandes gedrückt wird, werden die auf das Kautschukband in Seitenrichtung wirkenden Kräfte vergleichmäßigt, und zwar in Abhängigkeit von der Breite des Kautschukbandes. Bei besonders breitem Kautschukband wird das von den seitlichen Ausrichtelementen am weitest entfernt gelegene Kautschukbandseitenmaterial am weitesten aus der Förderebene ausgelenkt. Ein weniger breites Band erfährt geringere Auslenkung und damit geringere seitliche Verschiebekräfte. Diese Auslenkungsverteilung bewirkt, daß die Krafteinleitung in den mit hoher Bogensteifigkeit ausgebildeten Kautschukstreifen sich über die gesamte Breite im wesentlichen gleichmäßig verteilt und durch den der Kautschukstreifen gleichmäßig an die Seitenkanten herangeführt wird.

Hierdurch kann eine Ausrichtung der seitlichen Kante des Kautschukbandes parallel zur Förderrichtung ohne Aufbäumen der seitlichen Kante an den seitlichen Ausrichtelementen im wesentlichen durch Verschieben der in Förderrichtung hintereinander angeordneten Querschnittsflächen des Kauschukbandes gewährleistet werden. Die Genauigkeit in der Zuführung eines kontinuierlich geförderten plastischen Bandmaterials, insbesondere eines Kautschukbandes vorzugsweise zur Reifenherstellung, und somit die Weiterverarbeitung in einer in Förderrichtung nachgeordneten Weiterverarbeitungseinrichtung mit einfachen Mitteln wird hierdurch verbessert.

Das Band kann somit bei konstanter Förderrichtung der Weiterverarbeitungseinrichtung mit geradliniger Kante zugeführt werden. Dabei behält die begradigte Kante des plastischen Bandes ihre in Richtung quer zur Förderrichtung ausgerichtete Position während der weiteren Förderung und Zuführung zur Weiterverarbeitungseinrichtung bei. Ein exaktes Weiterverarbeiten ist aufgrund der gesicherten Kantenposition in definierter Lage quer zur Förderrichtung einfach möglich. Die Produktqualität des in der Weiterverarbeitungeinrichtung erzeugten Guts wird vergleichmäßigt und verbessert. Hoher Steuer- und Regelungsaufwand zur Sicherstellung der Bandposition kann entfallen.

Bevorzugt wird ein Verfahren, bei dem in der Begradigungseinrichtung schräg zur Förderrichtung ausgerichtete Rotationskörper des Kautschukbandes unter Verformung des Kautschukbandes in dessen Förderebene seitlich gegen die Ausrichtelemente der Begradigungseinrichtung drücken. Mit nur geringen Reibungsverlusten gewährleisten die schräg ausgerichteten Rotationskörper sowohl eine sichere Förderung durch die Begradigungseinrichtung in Förderrichtung als auch ein seitliches Verschieben des Bandes zum Ausrichtelement, gegen das sie das Band drücken und aufgrund der kontinuierlichen Förderung zu einer geradlinigen Kante verformen.

Durch die Ausbildung des Fördertischs gemäß den Merkmalen von Anspruch 7 wird ein Auslenken des Bandes mit von der Bandseite, die dem seitlichen Ausrichtelementen zugewandt ist, zur gegenüberliegenden Seite kontinuierlicher Zunahme dermaximalen Auslenkung des Bandes aus der Förderebene und ein anschließendes Wiedereinlenken bewirkt. Die kontinuierlich veränderte Auslenkung bewirkt ein kontinuierliches seitliches Verschieben der Bahn zu der Seite mit der kleineren maximalen Auslenkung gegen die seitlichen Ausrichtelemente. Dabei werden die in Förderrichtung hintereinander angeordneten senkrecht zur Förderrichtung ausgerichteten Querschnittsflächen des Kautschukbandes seitlich gegeneinander verschoben und mit ihrer zum seitlichen Ausrichtelement hinweisenden Seite auf einer Geraden parallel zur Förderrichtung ausgerichtet.

Bevorzugt wird die Ausbildung eines Fördertischs gemäß den Merkmalen von Anspruch 5. Mit einfachen Mitteln mit geringen Reibungsverlusten wird sowohl die kontinuierliche Förderbarkeit in Förderrichtung gewährleistet, als auch durch Reibkontakt zwischen Band und Fördermittel das Band sicher an das seitliche Ausrichtelement gedrückt. Durch nicht parallele Anordnung der Rotationsachse erfährt das Band eine über seine Bandbreite durch den Rotationskörper eingeleitete seitliche Kraftkomponente und eine seitliche Verschiebung zu den Ausrichtelementen. Durch nicht parallele Anordnung der Rotationsachse zur Förderebene erhält die Förderbahn quer zur Förderrichtung kontinuierlich veränderte Auslenkungen. Bei bestimmtem Reibungsbeiwert zwischen plastischem Material und Rotationskörper kann durch geeignete Einstellung des Winkels β des Rotationskörpers zur Förderebene das ideale Maß für die das plastische Band gegen die Ausrichtelemente drückenden seitlichen Kraft eingestellt werden. Zur Optimierung kann die Rotationsachse sowohl unter einem Winkel α zur Förderrichtung als auch unter einem Winkel β zur Förderebene in einer Ebene quer zur Förderrichtung ausgebildet werden. Zur individuellen Feinabstimmung auf unterschiedliche zu fördernde bandförmige Materialien ist es vorteilhaft, die Rotationsachsein ihrem Winkel α und/oder in ihrem Winkel β einstellbar auszubilden. Der Ratationskörper kann frei drehbar gelagert sein, so daß die Umlenkung allein aufgrund der durch die Fördermittel auf das Förderband übertragenen Fördergeschwindigkeit und der zwischen Förderband und frei drehbar gelagerten Rotationskörper wirkenden Reibkräfte erfolgt. Für besondere Anwendungen ist es auch denkbar, den Rotationskörper in Wirkverbindung mit hierfür ausgebildeten, bekannten gesteuerten Antriebsmitteln, beispielsweise durch Ein- und späteres Wiederauskuppeln, zu bringen.

Die Merkmale des Anspruchs 6 stellen bevorzugte Ausbildungen des Fördertischs dar.

Die Erfindung wird im Folgenden anhand der in den Figuren 1 bis 5 am Beispiel zur Förderung von Kautschukbändern für Seitenteile eines Fahrzeugluftreifens zur Reifenaufbaumaschine bekannter Art erläutert. Hierin zeigen
- Fig. 1.: schematische Darstellung der Förderung eines Kautschukbandes zur Erzeugung eines Seitenstreifens zur Aufbautrommel in Seitenansicht,
- Fig. 2:: Darstellung von Fig.1 in Draufsicht,
- Fig. 3:: schematische Darstellung eines Fördertischs mit Begradigungseinrichtung gemäß Schnittdarstellung III - III von Fig. 2,
- Fig. 4:: Fördertisch gemäß Fig. 3 in Schnittdarstellung gemäß IV-IV von Fig. 3,
- Fig. 5:: schematischer Querschnittsdarstellung gemäß Schnitt V - V von Fig. 4.

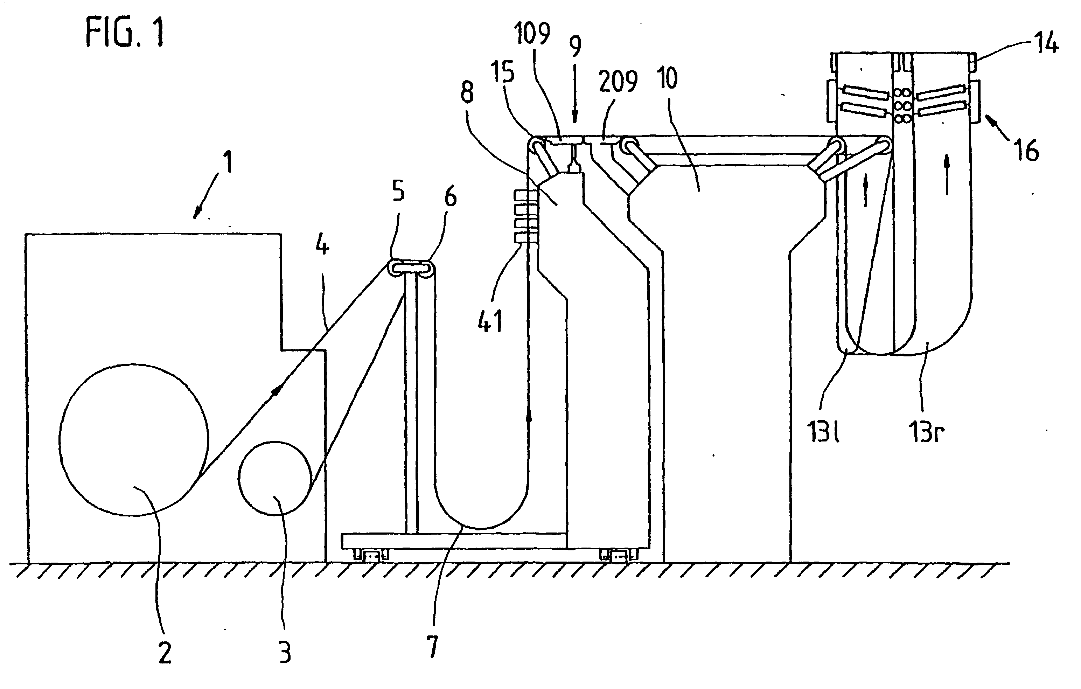

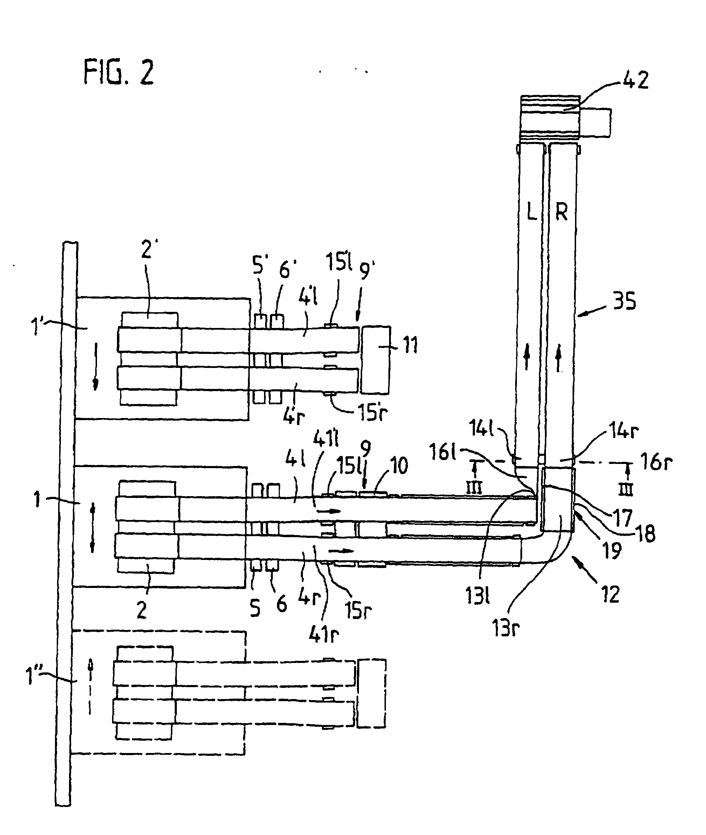

Die Figuren 1 und 2 zeigen den schematischen Aufbau des Förderweges von kontinuierlichen geförderten Kautschukbändern zur Herstellung von Reifenseitenwänden von einem Bandspeicher 1 bekannter Bauart zu einer Reifenaufbautrommel 42 bekannter Bauart. Da zur Herstellung des Fahrzeugreifens zwei wesensgleiche Reifenseitenwände parallel gefertigt werden, werden auch zwei Kautschukbänder 4 (l), 4 (r) zur Herstellung einer linken und zur Herstellung einer rechten Reifenseitenwand parallel aus dem Bandspeicher 1 zur Reifenaufbautrommel gefördert. Da die Fördereinrichtung für beide Kautschukbänder 4 (l), 4 (r) identisch und spiegelbildlich zur Mittellinie zwischen den beiden Förderwegen aufgebaut sind, wird im folgenden die Förderung nur am Beispiel des mit dem Index r bezeichneten rechten Kautschukbandes 4 (r) beschrieben.

Der Bandspeicher 1 ist in bekannter Weise mit einer Aufwickeltormmel 3 und mit einer Abwickeltrommel 2 ausgebildet. Von der Abwickeltrommel 2 wird das auf trennendem umlaufendem Gewebematerial bekannter Bauart aufgelegte Kautschukmaterial mit dem Gewebematerial abgewickelt und um eine Umlenkrolle 5 geführt. Hinter der Umlenkrolle 5 wird das trennende Gewebematerial nach unten umgelenkt und auf der Aufwickeltrommel aufgewickelt. Im Bereich der Umlenkrolle 5 wird vom Gewebematerial in bekannter Weise das Kautschukband 4 getrennt und um die Umlenkrolle 6 über eine Speicherschleife 7 und um mit Umlenkrollen ausgebildete Fördertische 8 und 10 in eine weitere Speicherschleife 13 mit 90°-Richtungswechsel eingeführt, von wo aus das Kautschukband 4 nach dem Richtungswechsel senkrecht nach oben über einen Fördertisch 19 durch eine Begradigungseinrichtung 16 geführt und um Umlenkrollen 14 und über ein angetriebenes Förderband 35 bis zur Aufbautrommel 42 gezogen wird. Falls baulich genügend Raum zur Verfügung steht, kann der 90°-Richtungswechsel entfallen.

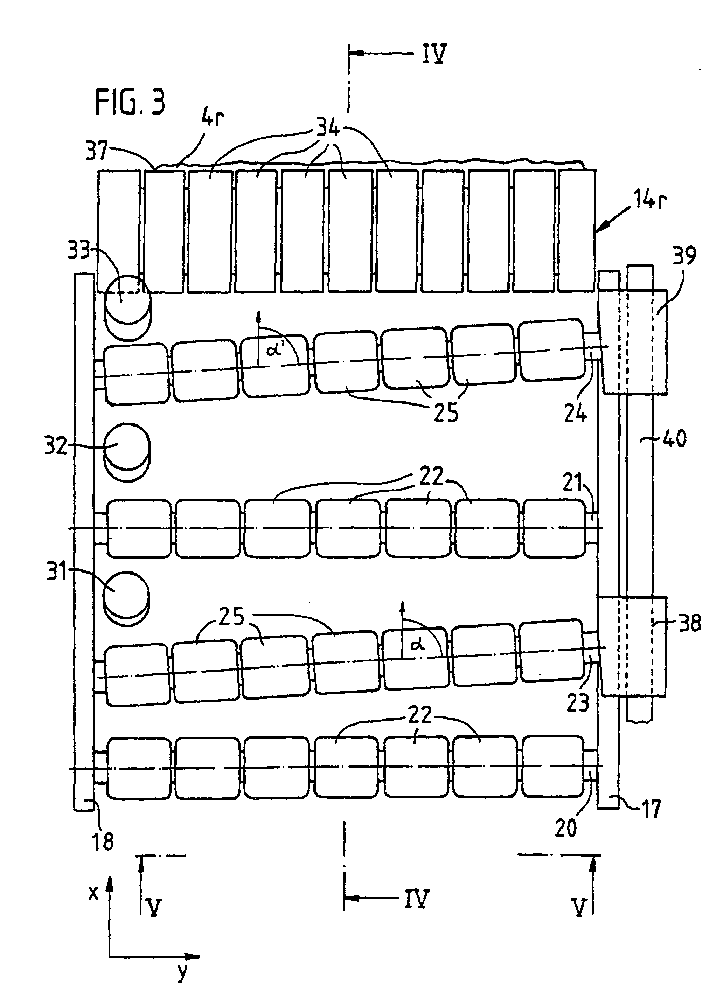

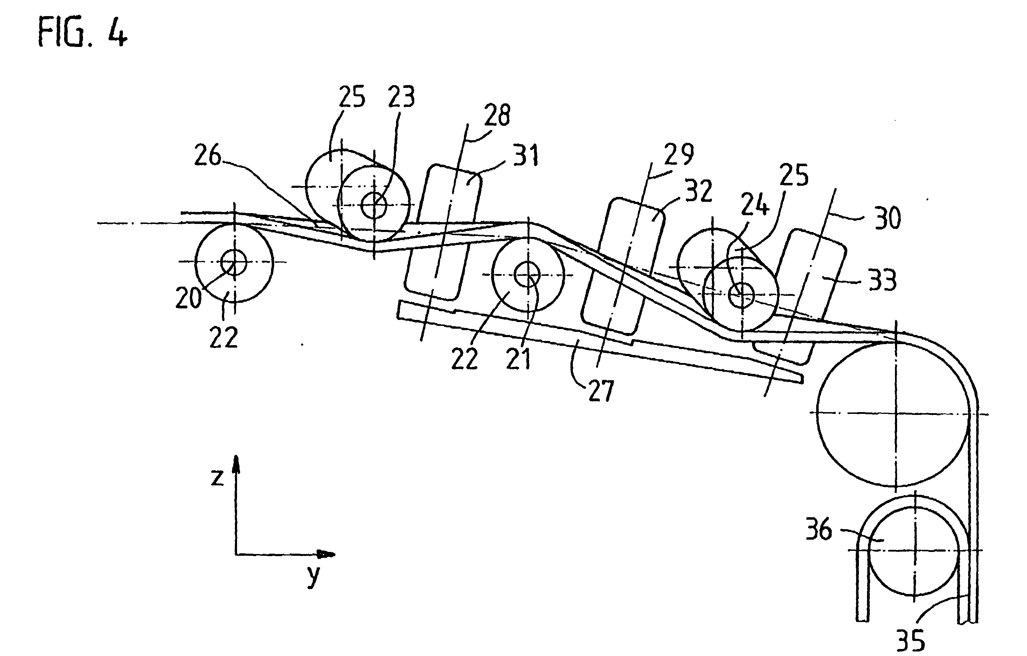

Wie in den Figuren 3 und 4 dargestellt ist, sind im Fördertisch 19 mit in Förderrichtung hintereinander angeordneten quer zur Förderrichtung ausgerichteten Achsen 20 und 21 ausgebildet, auf denen gleichmäßig beabstandet über die Breite des Fördertisches verteilt angeordnete Umlenkrollen 22 unabhängig voneinander drehbar gelagert sind. Das Kautschukband 4 wird vom Förderband 35, das um drehbar gelagerte Umlenkrollen, von denen lediglich die Umlenkrolle 36 in der Figur 4 dargestellt ist, geführt ist und das mit einer steuerbaren Antriebseinrichtung in Antriebsverbindung steht, über die Umlenkrollen 22 und über auf einer quer zur Förderrichtung ausgerichteten Umlenkachse 14 äquidistant zueinander und über die Breite des Fördertisches verteilt angeordnete, unabhängig voneinander drehbar gelagerte Walzen 34 gezogen. Die Tangentialebene an die Umlenkwalzen 22 der Achsen 20 und 21 sowie in Förderrichtung nachgeordnet die Tangentialebene an die Umlenkwalzen 22 der Achse 21 sowie an die Umlenkwalzen 34 der Achse 14 bilden zwischen Achse 20 und Achse 14 die strichpunktiert dargestellte Förderebene 26.

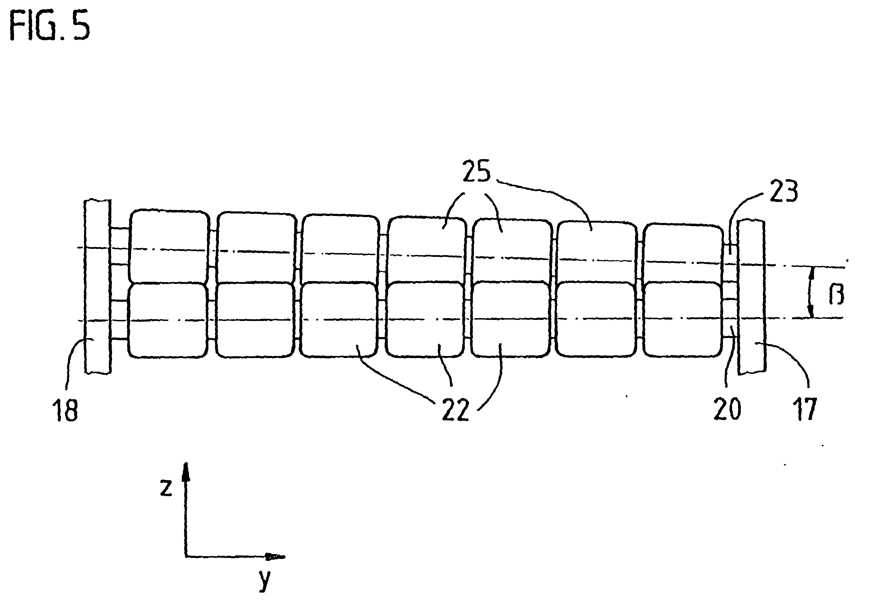

Zwischen den Achsen 20 und 21 ist eine quer zur Förderrichtung über den gesamten Fördertisch reichende Achse 23 in der Seitenwand 18 sowie in einem Lagerkloben 38 gelagert. Ebenso ist zwischen der Achse 21 und der Achse 14 eine quer zur Förderrichtung über den gesamten Förderrichttisch reichende Achse 24 in der Seitenwand 18 und in einem Lagerkloben 39 gelagert. Die Achsen 23 und 24 schließen jeweils einen Winkel α bzw. α' zur Förderrichtung ein. Wie in Figur 5 schematisch dargestellt ist, schließen die Achsen 23 und 24 in einer Ebene, die senkrecht zur Förderebene verläuft, einen Winkel β bzw. β' zur Förderebene ein. Mit Hilfe einer Stellwelle 40 können die Kloben 38 und 39 um die Stellwelle 40 verdreht werden, so daß der Winkel β bzw. β' entsprechend den individuellen Erfordernissen eingestellt werden kann.

Wie aus den Figuren 2, 3 und 4 zu erkennen ist, ist im rechten Fördertisch 19r auf seiner linken, zum linken Fördertisch 19 l weisenden Seite zwischen den Achsen 23 und 21 sowie zwischen den Achsen 21 und 24 und zwischen den Achsen 24 und 14 senkrecht zur Förderebene in einer Ebene parallel zur Förderrichtung jeweils eine Achse 28, 29, 30 in einer am linken Seitenteil 18 befestigten Platte 27 befestigt. Auf den Achsen 28, 29, 30 ist jeweils ein als zylindrischer Walzenkörper ausgebildeter Anschlagskörper 31, 32, 33, der sich durch die Förderebene 26 hindurch erstreckt, drehbar gelagert.

Die Winkel α bzw. α' der Achsen 23, 24, gemessen von der Förderrichtung mit Blick in Förderrichtung nach rechts drehend, ist jeweils kleiner 90°, beispielsweise 84°. Abhängig von den Reibwerten zwischen Walzen und Kautschukband ist es denkbar, den Winkelbereich zur Gewährleistung einer sicheren Förderung auf 82° bis 86° zu begrenzen. Die Achsen 23 und 24 sind so angeordnet, daß sich ihre Walzen 25 jeweils mit ihren Außendurchmessern auf die Seite der Förderebene 26 erstrecken, auf der sich die Achsen 20, 21 und 14 befinden. Das Kautschukband wird zwischen den Walzen 22 der Achsen 20 und 21 sowie den Walzen 34 der Umlenkachse 14 einerseits und den Walzen 25 der Achsen 23 und 24 andererseits hindurchgeführt und durch die Walzen 25 aus ihrer Förderebene heraus und durch die Umlenkrollen 22 und 34 wieder in diese hineingelenkt. Das Kautschukband und die Walzen 22, 25 und 34 stehen hierdurch unter wirksamem Reibkontakt. Die durch Wahl des Winkels α baw. α' gewählte Schräganstellung der Achsen 23 und 24 bewirken eine von den Walzen 25 auf das Kautschukband 4 übertragene Querverschiebung zu den drehbaren Anschlagrollen 31, 32, 33 hin. Das Kautschukband wird mit seiner zu diesen Anschlägen 31, 32, 33 hinweisenden Kante 37 gegen die Anschläge 31, 32, 33 gedrückt und gleichzeitig in Förderrichtung gefördert. Dabei wird die Kante 37 entlang der zur Förderrichtung parallelen Tangentialebene der Anschlagwalzen 31, 32, 33 durch Querschnittsverformung des Kautschukbandes 4 ausgerichtet. Das Kautschukband 4 wird im ausgerichteten Zustand um die Umlenkrollen 34 über das Förderband 35 bis hin zur Aufbautrommel gefördert und dieser im ausgerichteten Zustand zugeführt.

Durch die unabhängig voneinander parallel zueinander drehbar gelagerten mit geringer axialer Breite ausgebildeten Umlenkwalzen 34 drehen die Umlenkwalzen 34 entsprechend der jeweils über ihnen aufgehäuften Dicke des Kautschukmaterials und dem dadurch gebildeten Umlenkradius der neutralen Linie des Kautschukmaterials so aufeinander angepaßt, daß die Position der Anschlagkante 37 sich auch bei der Umlenkung um die Achse 14 aufgrund unterschiedlicher Dicken des Kautschukmaterials nicht verändert.

Zur Verstärkung der Verschiebebewegung seitlich zu den Anschlagskörpern 31, 32, 33 können entsprechend den jeweiligen Erfordernissen mit Hilfe der Stellwelle 40 und den Lagerkloben 38, 39 die Achsen 23 und 24, wie in Figur 5 dargestellt ist, um einen Winkel β bzw. β' aus einer Ebene parallel zur Förderebene herausgedreht werden, so daß die den Anschlagskörpern 31, 32, 33 nächstliegenden Umlenkwalzen 25 am wenigsten und die am weitesten von den Anschlagkörpern 31, 32, 33 entfernt gelegenen Walzen 25 am weitesten ausgelenkt werden. Beispielsweise kann der Winkel β, β' in einem Bereich von 0 bis 15° individuell verstellt werden. Bewährt hat sich die Einstellung des Winkels β = 6°.

Es ist auch denkbar, die Winkel α,α' einstellbar auszubilden. Ebenso ist es denkbar, die Stellachsen 23, 24 mit voreingestelltem Winkel β, β' auszubilden und nur die Winkel α,α' verstellbar auszubilden.

Es ist auch denkbar, in Anlagen mit nur geringen Fördergeschwindigkeiten eine Begradigungseinrichtung anstelle von mit zwei Achsen 20 und 21 und zwei unter einem Winkel schräg verlaufend ausgebildeten Achsen 23 und 24 lediglich eine Achse 20 und eine unter einem Winkel schräg verlaufend ausgebildete Achse 23 auszubilden. Es ist auch denkbar, die Zahl der Anlagekörper zu variieren.

Ebenso ist es denkbar, derartige Begradigungseinrichtungen zusätzlich im Bereich der Förderung zwischen Bandspeicher 1 und Aufbautrommel 42 weiteren in die Förderung eingebauten Sondereinrichtung zur Weiterverarbeitung vorzuordnen. Beispeilsweise ist es denkbar, zum Kautschukbandwechsel bei leergelaufener Abwickeltrommel 2 den Förderbereich zwischen Kassette 1 und Fördertisch 8 seitlich verschiebbar auszubilden, wie in Figur 1 und 2 dargestellt ist. Nach Leerlaufen der Aufwickeltrommeln 3 wird die gesamte verschiebbare Einrichtung aus der Arbeitsposition in eine Position '' verschoben, in der die Kassette 1 die Position 1" einnimmt. Eine identisch zwischen Bandspeicher 1 und Fördertisch 8 ausgebildete Einheit wird aus Position ', in der die Kassette 1 die Position 1' einnimmt, in Arbeitsposition verfahren. Das neue Kautschukband 4 wird noch in der alten Position des Bandspeichers 1' durch die Speicherschleife 7' um Umlenkrollen 15' auf eine Tischplatte 109' am Fördertisch 8' gezogen. Es ist denkbar, den Umlenkrollen 15 in Förderrichtung vorgeordnet, eine Begradigungseinrichtung 41, wie in Figur 1 und 2 schematisch dargestellt ist, auszubilden.

Die Begradigungseinrichtung 41 erhält im wesentlichen den gleichen Aufbau wie die bereits beschriebene Begradigungseinrichtung 16. Zur Umlenkung auf die Tischplatte 109 sind anstelle der zur Begradigungsreinrichtung 16 beschriebenen Umlenkrollen 34 die Umlenkrollen 15 parallel zueinander unabhängig voneinander äquidistant drehbar gelagert. Eine solche Begradigungseinrichtung 41 ermöglicht ein in ihrer Position quer zur Förderrichtung konstantes Fördern des Kautschukbandes 4 in der Position 1' des Bandspeichers 1 über die Tischplatte 9' und eine stationär befestigte Tischplatte 11. In so ausgerichtetem Zustand wird die Förderung gestoppt und das Kautschukband zwischen Tischplatte 109' und Tisch 11 mit einem Schnitt quer zur Förderrichtung in seiner Stirnseite abgeschnitten. Dadurch erhält das Kautschukband sowohl in seiner Position quer zur Förderrichtung als auch mit seiner Schnittfläche in der Stirnseite genau definierte Kanten. Nach Verschieben der gesamten Einrichtung aus Bandspeicher 1 bis Fördertisch 8 aus ihrer Position 1' bzw. 8' in ihrer Arbeitsposition 1 bzw. 8, in der die Tischplatte 109 einer am Fördertisch 10 ausgebildeten Weiterführplatte 209 definiert gegenübersteht, nimmt das neue Kautschukband die gleiche Position quer zur Förderrichtung ein, wie das alte über die Weiterführplatte 209 des Fördertisches 10 abgezogene Kautschukband. Der neue Kautschukbandanfang kann mit dem alten Kautschukbandende genau verbunden werden. Auch bei Fehlen eines Kautschukbandendes im Bereich der Weiterführplatte 209 nimmt das neue Kautschukband die zum Weitertransport gewünschte Position ein. Aufgrund der geringen Fördergeschwindigkeiten im Bereich der Begradigungseinrichtung 41 genügt hier die Ausbildung der Begradigungseinrichtung lediglich mit einer schräg zur Förderrichtung verlaufenden Achse 23.

### Bezugszeichenliste

- 1: Bandspeicher
- 2: Abwickeltrommel
- 3: Aufwickeltrommel
- 4: Kautschukband;
- 4l: Linker Seitenstreifen
- 4r: rechter Seitenstreifen
- 5: Umlenkrolle
- 6: Umlenkrolle
- 7: Speicherschleife
- 8: Fördertisch
- 9: Wechselstation
- 10: Fördertisch
- 11: Schneidetisch
- 12: Umlenkstation
- 13: Speicherschleife
- 14: Umlenkrollen
- 15: Umlenkrollen
- 16: Begradigungseinrichtung
- 17: Seitenwand
- 18: Seitenwand
- 19: Fördertisch
- 20: Achse
- 21: Achse
- 22: Walze
- 23: Achse
- 24: Achse
- 25: Walze
- 26: Förderebene
- 27: Platte

### Bezagszeichenliste

- 28: Achse
- 29: Achse
- 30: Achse
- 31: Anschlagzylinder
- 32: Anschlagzylinder
- 33: Anschlagzylinder
- 34: Walze
- 35: Förderband
- 36: Umlenkrolle
- 37: Kante
- 38: Lagerkloben
- 39: Lagerkloben
- 40: Stellwelle
- 41: Begradigungseinrichtung
- 42: Aufbautrommel

## Patentansprüche

1. Verfahren zur Förderung eines Bandes aus plastischem Material, insbesondere eines Kautschukbandes (4), zu einer Weiterverarbeitungseinrichtung (42),
- wobei die senkrecht zur Förderrichtung ausgebildeten in Förderrichtung hintereinander angeordneten Querschnittsflächen des Bandes (4) zueinander vor Erreichen der Weiterverarbeitungseinrichtung (42) während der Förderung in Richtung quer zur Förderrichtung so verschoben werden, daß die Querschnittsflächen mit ihrer einen das Band (4) zu einer Seite hin begrenzenden Querschnittsseite (37) einen parallel zur Förderrichtung ausgebildeten Kantenverlauf des Bandes (4) bilden und diesen bis zum Erreichen der Weiterverarbeitungseinrichtung (42) beibehalten,
- **dadurch gekennzeichnet,**
**daß** das Band (4) in der Begradigungseinrichtung (16) zumindest zwischen zwei in Förderrichtung hintereinander angeordneten Förderelementen (20, 22, 21, 14, 34) zur Förderung des Bandes (4) in seiner Förderebene (26) aus der Förderebene (26) heraus- und wieder in die Förderebene (26) hineingelenkt wird, wobei die maximale Auslenkung des Bandes (4) über die Breite des Bandes (4) von der einen zu der anderen Seite des Bandes (4) kontinuierlich zunimmt, so daß das Band (4) über seine Breite unterschiedlich stark ausgelenkt und dadurch seitlich gegen die seitlichen Ausrichtelemente (31, 32, 33) auf der Bandseite mit der kleineren maximalen Auslenkung des Bandes (4) gedrückt wird.

2. Verfahren zur Förderung eines Bandes gemäß den Merkmalen von Anspruch 1,
- bei dem in der Begradigungseinrichtung schräg zur Förderrichtung ausgerichtete Rotationskörper das Band unter Verformung des Bandes (4) in dessen Förderebene seitlich gegen die Ausrichtelemente der Begradigungseinrichtung drücken.

3. Fördertisch (13) zur kontinuierlichen Förderung von bandförmigem plastischem Material (4), insbesondere von Kautschukmaterial vorzugsweise zur Herstellung eines Reifens zu einer Weiterverarbeitungseinrichtung (42),
- mit einer Begradigungseinrichtung (16) zur Begradigung einer seitlichen Begrenzungskante (37) des Bandes (4) und mit konstanter Förderrichtung im Bereich der Begradigungseinrichtung (16),
- mit Mitteln zum Verschieben der in Förderrichtung aufeinander folgenden, senkrecht zur Förderrichtung ausgebildeten Querschnittsflächen des Bands (4) zueinander quer zur Förderrichtung und zur Ausrichtung dieser Querschnittsflächen mit ihrer einen, das Band (4) begrenzenden Seite (37) in einer Linie parallel zur Förderrichtung in einer in der Breite des Fördertisches (19), insbesondere einstellbaren, seitlichen Position,
**dadurch gekennzeichnet,**
- **daß** die Mittel zum Verschieben des Bandes (4) Mittel zur Auslenkung (23, 24, 25) des Bandes (4) aus seiner Förderebene (26) und zur Wiedereinlenkung in die Förderebene (26) aufweisen,
- wobei die maximale Auslenkung des Bandes (4) über die Breite des Bandes (4) von der einen zu der anderen Seite des Bandes (4) kontinuierlich zunimmt, so daß das Band (4) über seine Breite unterschiedlich stark ausgelenkt und dadurch seitlich gegen die seitlichen Ausrichtelemente (31, 32, 33) auf der Bandseite mit der kleineren maximalen Auslenkung des Bandes (4) gedrückt wird.

4. Fördertisch gemäß den Merkmalen von Anspruch 3,
- bei der die Begradigungseinrichtung (16) mit Mitteln zum Verschieben des Bandes (4) seitlich zur Förderrichtung und
- mit wenigstens einem, eine seitliche Anschlagkante (31, 32, 33) bewirkenden seitlichen Anschlagelement ausgebildet ist.

5. Fördertisch gemäß den Merkmalen von Anspruch 3 oder 4,
- daß die Mittel zum Verschieben des Bandes (4) Mittel zur Auslenkung (23, 24, 25) des Bandes (4) aus seiner Förderebene (26) und zur Wiedereinlenkung in die Förderebene (26) aufweisen,
- wobei die Mittel zur Auslenkung (23, 24, 25) im Fördertisch um wenigstens eine im wesentlichen quer zur Förderrichtung ausgerichtete Rotationsachse (23, 24) drehbar gelagerte rotatorisch umlaufende Fördermittel (25) aufweisen und
- wobei die Ratationsachse (23, 24) nicht parallel zur Förderebene (26) und/oder zur Ebene quer zur Förderrichtung im Bereich der Begradigungseinrichtung (16) verläuft.

6. Fördertisch gemäß den Merkmalen von Anspruch 5,
- wobei die Rotationsachse (23, 24) in einer Ebene parallel zur Förderebene (26) einen Winkel α zur Förderrichtung und in einer Ebene senkrecht zur Förderrichtung einen Winkel β zur Förderebene (26) einschließt, wobei entweder α < 90°, bevorzugt α zwischen 60° und 88°, mit β zwischen 0 und 20° oder α zwischen 60° und 90° mit β > 0°, bevorzugt β zwischen 2° und 20°, beträgt.

7. Fördertisch gemäß den Merkmalen von Anspruch 3, 4 oder 5,
- bei dem die Begradigungseinrichtung (16) mit Mitteln zum Auslenken (23, 24, 25) des Bandes (4) aus seiner Förderebene (26) heraus mit von einer Bandseite zur anderen Bandseite kontinuierlich zunehmender maximaler Auslenkung und zum Wiedereinlenken in die Förderebene (26) ausgebildet ist,
- bei dem jeweils mindestens ein seitliches Anschlagelement (31, 32, 33) den Mitteln zur Auslenkung (23, 24, 25) in Förderrichtung nachgeordnet ist, das bei Förderung seitlich neben dem geförderten Band (4) an der Seite des Bandes mit der kleineren maximalen Auslenkung durch die Förderebene (26) hindurchgreift, so daß das durch die Mittel zum Auslenken (23, 24, 25) und zum Wiedereinlenken zur Seite mit der größeren Auslenkung verschobene Band im Bereich seiner Förderebene (26) während der Förderung durch das Anschlagelement (31, 32, 33) mit seinen zu dem Anschlaglelement weisenden Seiten der Querschnittsflächen des Bandes (4) in der seitlichen Position der Anschlagsflächen des Anschlagelements (31, 32, 33) ausgerichtet wird.

8. Fördertisch gemäß den Merkmalen von Anspruch 5, 6 oder 7,
- mit Mitteln (38, 39, 40) zum gesteuerten Einstellen der Auslenkung, insbesondere der Winkel α und/oder β der Rotationsachse (23, 24).

9. Fördertisch gemäß den Merkmalen von Anspruch 5, 6 oder 7,
- wobei die Mittel zur Auslenkung (23, 24, 25) im Fördertisch um mehrere um eine im wesentlichen quer zur Förderrichtung ausgerichtete Rotationsachse (23, 24) äquidistant, gleichmäßig verteilte drehbar gelagerte rotatorisch umlaufende Fördermittel (25) aufweisen.

## Claims

1. Method of conveying a strip formed from plastic material, more especially a rubber strip (4), to a further processing means (42),
- wherein the cross-sectional faces of the strip (4), which extend perpendicularly relative to the conveying direction and are disposed one behind the other when viewed with respect to the conveying direction, are so displaced relative to one another during the conveyance in a transverse direction relative to the conveying direction, prior to reaching the further processing means (42), that the cross-sectional faces form, with their one cross-sectional side (37) defining the strip (4) towards one side, an edge shape for the strip (4) extending parallel to the conveying direction, and said faces retain this shape until the further processing means (42) is reached,
**characterised in that**
- the strip (4) is guided out of the conveying plane (26) and back again into the conveying plane (26) in the straightening means (16) between at least two conveying members (20, 22, 21, 14, 34), disposed one behind the other when viewed with respect to the conveying direction, to convey the strip (4) in its conveying plane (26), the maximum deflection of the strip (4) continuously increasing over the width of the strip (4) from one side of the strip (4) to the other side thereof, so that the strip (4) is deflected to a variable extent over its width and is thereby urged laterally towards the lateral aligning members (31, 32, 33) on the strip side with the smaller maximum deflection of the strip (4).

2. Method of conveying a strip according to the features of claim 1,
- wherein rotational bodies, aligned in the straightening means obliquely relative to the conveying direction, urge the strip laterally towards the aligning members of the straightening means whilst deforming the strip (4) in its conveying plane.

3. Conveyor table (13) for continuously conveying strip-like plastic material (4), more especially rubber material preferably for the production of a tyre, to a further processing means (42),
- having a straightening means (16) for straightening a lateral boundary edge (37) of the strip (4) and having a constant conveying direction in the region of the straightening means (16),
- having means for displacing the cross-sectional faces of the strip (4), which follow one another when viewed with respect to the conveying direction and extend perpendicularly relative to the conveying direction, relative to one another transversely relative to the conveying direction and means for aligning these cross-sectional faces with their one side (37), which defines the strip (4), in a line parallel to the conveying direction in a lateral position, which is more especially adjustable in respect of the width of the conveyor table (19),
**characterised in that**
- the means for displacing the strip (4) include means (23, 24, 25) for deflecting the strip (4) from its conveying plane (26) and for guiding it back again into the conveying plane (26),
- the maximum deflection of the strip (4) continuously increasing over the width of the strip (4) from one side of the strip (4) to the other side thereof, so that the strip (4) is deflected to a variable extent over its width and is thereby urged laterally towards the lateral aligning members (31, 32, 33) on the strip side with the smaller maximum deflection of the strip (4).

4. Conveyor table according to the features of claim 3,
- wherein the straightening means (16) is provided with means for displacing the strip (4) laterally relative to the conveying direction and
- is provided with at least one lateral stop member which causes a lateral abutment edge (31, 32, 33).

5. Conveyor table according to the features of claim 3 or 4,
**characterised in that**
- the means for displacing the strip (4) include means (23, 24, 25) for deflecting the strip (4) from its conveying plane (26) and for guiding it back again into the conveying plane (26),
- the deflecting means (23, 24, 25) in the conveyor table including conveyor means (25), which circulate in a rotatory manner and are mounted so as to be rotatable about at least one rotary axis (23, 24) orientated substantially transversely relative to the conveying direction, and
- the rotary axis (23, 24) extending not parallel to the conveying plane (26) and/or to the plane transversely relative to the conveying direction in the region of the straightening means (16).

6. Conveyor table according to the features of claim 5,
- wherein the rotary axis (23, 24) forms an angle α relative to the conveying direction in a plane parallel to the conveying plane (26) and an angle β relative to the conveying plane (26) in a plane perpendicular to the conveying direction, either α being < 90°, preferably α being between 60° and 88°, with β being between 0° and 20°, or α being between 60° and 90°, with β being > 0°, preferably β being between 2° and 20°.

7. Conveyor table according to the features of claim 3, 4 or 5,
- wherein the straightening means (16) is provided with means (23, 24, 25) for deflecting the strip (4) out of its conveying plane (26), with a maximum deflection which continuously increases from one strip side to the other strip side, and for guiding it back again into the conveying plane (26),
- wherein at least one respective lateral stop member (31, 32, 33) is disposed downstream of the deflecting means (23, 24, 25) when viewed with respect to the conveying direction, which stop member extends through the conveying plane (26), during conveyance laterally adjacent the conveyed strip (4) on the side of the strip with the smaller maximum deflection, so that the strip, which is displaced by the means (23, 24, 25) for deflecting it and guiding it back again to the side with the greater deflection, is aligned in the region of its conveying plane (26) during the conveyance by the stop member (31, 32, 33), with its sides, pointing towards the stop member, of the cross-sectional faces of the strip (4) in the lateral position of the stop faces of the stop member (31, 32, 33).

8. Conveyor table according to the features of claim 5, 6 or 7,
- having means (38, 39, 40) for the controlled setting of the deflection, more especially the angle α and/or β of the rotary axis (23, 24).

9. Conveyor table according to the features of claim 5, 6 or 7,
- wherein the deflecting means (23, 24, 25) in the conveyor table include a plurality of equidistantly, uniformly distributed conveying means (25), which circulate in a rotatory manner and are mounted so as to be rotatable about a rotary axis (23, 24) orientated substantially transversely relative to the conveying direction.

## Revendications

1. Procédé pour transporter une bande formée d'une matière plastique, notamment une bande de caoutchouc (4) jusqu'à un dispositif de traitement aval (42),
- selon lequel les surfaces en coupe transversale de la bande (4), qui sont disposés perpendiculairement à la direction de transport et les unes derrière les autres dans la direction de transport, sont déplacés les unes par rapport aux autres sans que le dispositif de traitement aval (42) soit atteint, pendant le transport, dans une direction transversale par rapport à la direction de transport de telle sorte que les surfaces en coupe transversale conservent, au niveau d'un de leur côté en coupe transversale (37) limitant la bande (4) d'un côté, une configuration du bord de la bande (4), qui est parallèle à la direction de transport et conservent cette configuration jusqu'à ce que le dispositif de traitement aval (42) soit atteint,
- **caractérisé en ce que**
dans le dispositif de redressement (16) entre au moins deux éléments de transport (20, 22, 21, 14, 34) disposés l'un derrière l'autre dans la direction de transport et servant à transporter la bande (4) dans son plan de transport (26), la bande (4) est déviée à partir de son plan de transport (26) et est à nouveau ramenée dans son plan de transport (26), la déviation maximale de la bande (4) augmentant continûment sur l'étendue en largeur de la bande (4) d'un côté jusqu'à l'autre côté de la bande (4), de sorte que la bande (4) est déviée à des degrés différents sur sa largeur et de ce fait est repoussée latéralement contre les éléments latéraux d'alignement (31, 32, 33) sur le côté de la bande, avec la plus faible déviation maximale de la bande (4).

2. Procédé pour transporter une bande selon les caractéristiques de la revendication 1,
- selon lequel dans le dispositif de redressement, des corps rotatifs, orientés obliquement par rapport à la direction de transport, repoussent la bande latéralement contre les éléments de redressement du dispositif de redressement, en déformant la bande (4), dans son plan de transport.

3. Table de transport pour le transport continu d'une matière plastique en forme de bande (4), notamment d'un caoutchouc, de préférence pour fabriquer un pneumatique en direction d'un dispositif de traitement aval (42),
- comportant un dispositif de redressement (16) servant à redresser un bord latéral limite (37) de la bande (4) et avec une direction constante de transport dans la zone du dispositif de redressement (16),
- des moyens pour déplacer l'une par rapport à l'autre les surfaces en coupe transversale de la bande (4), qui se succèdent dans la direction de transport et sont disposées perpendiculairement à la direction de transport, transversalement par rapport à la direction de transport et orienter ces surfaces en coupe transversale, avec un de leurs côtés (37) limitant la bande (4), suivant une ligne parallèle à la direction de transport dans une position latérale réglable sur la largeur de la table de transport (19), et notamment réglable,
**caractérisée en ce que**
- les moyens de déplacement de la bande (4) comportent des moyens (23, 24, 25) pour faire dévier la bande (4) à partir de son plan de transport (26) et pour ramener la bande dans le plan de transport (28),
- la déviation maximale de la bande (4) augmentant continûment, sur l'étendue en largeur de la bande (4), d'un côté à l'autre de la bande (4), de sorte que la bande (4) est déviée à des degrés différents sur sa largeur et de ce fait est repoussée latéralement contre des éléments latéraux de redressement (31, 32, 33) sur le côté de la bande présentant la plus faible déviation maximale de la bande (4).

4. Table de transport selon les caractéristiques de la revendication 3,
- dans laquelle le dispositif de redressement (7) comporte des moyens pour déplacer la bande (4) latéralement par rapport à la direction de transport,
- au moins un élément latéral de butée, qui agit en tant que bord latéral de butée (31, 32, 33).

5. Table de transport selon les caractéristiques de la revendication 3 ou 4,
- dans laquelle les moyens de décalage de déplacement de la bande (4) comportent des moyens (23, 24, 25) pour faire dévier la bande (15) depuis son plan de transport (26) et pour ramener la bande dans le plan de transport (26),
- dans laquelle les moyens (23, 24, 25) de déviation comportent, dans la table de transport, des moyens de transport (25) qui circule en rotation et sont montés de manière à pouvoir tourner autour d'au moins un axe de rotation (23, 24), qui est aligné sensiblement transversalement par rapport à la direction de transport; et
- dans laquelle l'axe de rotation (23, 24) n'est pas parallèle au plan de transport (26) ni au plan transversal à la direction de transport dans la zone du dispositif de redressement (16).

6. Table de transport selon les caractéristiques de la revendication 5,
- dans laquelle l'axe de rotation (23, 24) fait, dans un plan parallèle avec l'axe de transport (26), un angle α par rapport à la direction de transport et, dans un plan perpendiculaire à la direction de transport, un angle β par rapport au plan de transport (26), avec soit α < 90°, de préférence α compris entre 60° et 90°, soit α compris entre 60° et 90° avec β > 0°, de préférence β compris entre 2° et 20°.

7. Table de transport selon les caractéristiques de la revendication 3, 4 ou 5,
- dans laquelle le dispositif de redressement (16) comporte des moyens (23, 24, 25) pour faire dévier la bande (4) à partir de son plan de transport (26), avec une déviation maximale qui augmente continûment d'un côté de la bande à l'autre, et pour ramener la bande dans le plan de transport (26),
- dans laquelle respectivement en aval des moyens (23, 24, 25) de déviation dans la direction de transport est disposé respectivement au moins un élément de butée latéral (31, 32, 33) qui, lors du transport, traverse le plan de transport (26) latéralement à côté de la bande transportée (4) sur le côté de la bande présentant la plus petite déviation maximale, de sorte que la bande, qui est décalée par les moyens (23, 24, 25) de déviation et de retour sur le côté présentant la déviation la plus grande, est orientée, dans la zone de son plan de transport (26), pendant le transport, par l'élément de butée (31, 32, 33) avec ses côtés, tournés vers l'élément de butée, des surfaces en coupe transversale, dans la position latérale des surfaces de buté de l'élément de butée (31, 32, 33).

8. Table de transport selon les caractéristiques de la revendication 5, 6 ou 7,
- comportant des moyens (38, 39, 40) pour régler d'une manière commandée la déviation, notamment l'angle α et/ou β de l'axe de rotation (23, 24).

9. Table de transport selon les caractéristiques de la revendication 5, 6 ou 7, dans laquelle les moyens de déviation (23, 24, 25) comportent des moyens de déplacement circulant en rotation (25), qui sont montés de manière à pouvoir tourner et sont répartis uniformément d'une manière équidistante autour d'un axe de rotation (23, 24), qui est orienté essentiellement transversalement par rapport à la direction de transport.
